# EUROPÄISCHE PATENTSCHRIFT

(11) **EP 1 437 585 B1**
(45) Veröffentlichungstag und Bekanntmachung des Hinweises auf die Patenterteilung: **27.08.2008**
(21) Anmeldenummer: 03025838.8
(22) Anmeldetag: 11.11.2003
(51) Int. Cl.: G01M 3/36, H01M 10/42

(54) **Verfahren zur Dichtigkeitsprüfung galvanischer Elemente**
Procedure for testing the leak tightness of galvanic elements
Procédé d'essai de l'étanchéité des éléments galvaniques

(30) Priorität: 13.01.2003 DE 10301430
(43) Veröffentlichungstag der Anmeldung: 14.07.2004
(73) Patentinhaber: VARTA Microbattery GmbH, 30419 Hannover (DE)
(72) Erfinder: Haug, Peter, Dr., 73479 Ellwangen (DE); Birke, Peter, Dr., 73479 Ellwangen (DE); Hald, Rainer, 73479 Ellwangen (DE); Holl, Konrad, Dr., 73434 Aalen-Dewangen (DE); Ilic, Dejan, Dr., 73479 Ellwangen (DE)
(74) Vertreter: Patentanwälte Ruff, Wilhelm, Beier, Dauster & Partner

(56) Entgegenhaltungen:
- EP-A- 0 473 173
- EP-A- 1 333 267
- US-A- 4 887 457
- PATENT ABSTRACTS OF JAPAN Bd. 1997, Nr. 09, 30. September 1997 (1997-09-30) & JP 09 115555 A (DENSO CORP), 2. Mai 1997 (1997-05-02)
- PATENT ABSTRACTS OF JAPAN Bd. 2000, Nr. 02, 29. Februar 2000 (2000-02-29) & JP 11 307136 A (FURUKAWA BATTERY CO LTD:THE), 5. November 1999 (1999-11-05)

## Beschreibung

Gegenstand der Erfindung ist ein Verfahren zur Dichtigkeitsprüfung galvanischer Elemente, die ein aus einer Metallfolie oder Metall/Kunststoff-Verbundfolie bestehendes dünnes flexibles Gehäuse besitzen.

Tragbare Geräte wie PDA's, Organizer, Laptops oder Cellular-phones benötigen wiederaufladbare Energiespeicher mit immer höheren volumetrischen und gravimetrischen Energiedichten. Größe und Gewicht der Gehäuse der galvanischen Elemente für derartige Anwendungen haben immer höheren Einfluss auf die Energiedichte der Elemente. Daher wird bei derartigen Elementen statt der herkömmlichen schweren und stabilen Becher, die meist aus vernickeltem Edelstahl oder aus Aluminium bestehen, eine leichte und sehr flexible Metall/Kunststoff-Verbundfolie als Gehäusematerial eingesetzt. Insbesondere werden Aluminium/Kunststoff-Verbundfolien verwendet.
Damit diese flexible Verbundfolie eng an den inneren Zellenbauteilen anliegt, wird diese vakuumverpackt, d. h. vor dem endgültigen Verschließen der Verbundfolie wird ein definierter Unterdruck angelegt, und erst dann wird die die Zellenbauteile umschließende Verbundfolie über einen Siegelvorgang gasdicht verschlossen. Unter Normaldruckbedingungen (1000 mbar) wird dann die Metall/Kunststoff Verbundfolie fest an die inneren Zellenbauteile angepresst. Je größer die Differenz zwischen Innendruck in der Zelle und dem äußeren Luftdruck, desto höher ist der Anpressdruck der das Gehäusematerial bildenden Verbundfolie an das Zelleninnere. Wenn der Innendruck der Zelle gleich oder größer wird als der Außendruck, führt dies zu einem Flattern oder sogar Aufblähen der Metall/Kunststoff-Verbundfolie.

Verschiedene Probleme können vor, während oder nach der Produktion der Zelle auftreten. Beispielsweise können Undichtigkeiten durch kleine Löcher in der Verbundfolie entstehen. Es kann eine ungenügende Entgasung der Zelle nach der Formation vorliegen oder es entsteht eine Undichtigkeit durch fehlerhafte Siegelung beim abschließenden Siegelvorgang. Undichtigkeiten können auch durch Fehler in der Siegelschicht oder durch Gasbildung in der Zelle durch Produktionsfehler wie beispielsweise durch einen internen Feinschluss oder Kurzschluss entstehen.

Bekannte Verfahren, um Zellen in einem Softpack bzw. einem dünnwandigen flexiblen Gehäuse auf derartige Probleme und Undichtigkeiten zu testen, sind langwierig und aufwendig.

Beispielsweise wird versucht, derartige Fehler durch Zurückwiegen einer Zelle nach einer definierten Lagerzeit bei erhöhter Temperatur nachzuweisen. Dabei ist allerdings nur eine stichprobenartige Kontrolle möglich, da die Zellen durch ein solches Verfahren irreversibel geschädigt werden.

Weitere Verfahren bestehen darin, Fehlstellen bzw. Löcher in der tiefgezogenen Metall/Kunststoff-Verbundfolie schon vor der Verwendung als Gehäusebauteil mittels Licht und Lichtsensor zu überprüfen. Dabei werden allerdings nur sehr große Löcher mit mindestens 10 µm Durchmesser aufgefunden. Später entstehende Löcher oder Gasung in der fertigen Zelle sind so nicht kontrollierbar.
Daneben ist es möglich, gasförmige flüchtige Elektrolytbestandteile mit einem Massenspektrometer nachzuweisen. Auch dies ist allerdings sehr aufwendig, und es ist nur eine stichprobenartige Kontrolle möglich.
Eine manuelle visuelle Kontrolle, die darauf gerichtet ist, zu überprüfen, ob die Metall/Kunststoff-Verbundfolie dicht anliegt, ist ebenfalls aufwendig und nicht ausreichend, da Löcher im Gehäusematerial oder in der Siegelschicht nicht kontrollierbar sind. Auch eine automatische visuelle Kontrolle, z. B. mittels eines Bildverarbeitungsystems zum Nachweis, ob die Metall/Kunststoff-Verbundfolie dicht anliegt, ist nicht prozesssicher realisierbar, da die Aluminium-Verbundfolie stark reflektiert und daher nur stark aufgeblähte Zellen erkennbar sind. Auch bei einer solchen Kontrolle sind Löcher im Softpack oder in der Siegelschicht nicht kontrollierbar.

Beispielsweise ist dem Dokument JP11307136A1 eine Vorrichtung zur Dichtigkeitsprüfung von geschweißtem Batteriegehäuse durch Differenzdruckmessung zu entnehmen, und im Dokument JP9115555 ist ein Verfahren und eine Vorrichtung zur Dichtigkeitsprüfung von Batterien durch Auswertung einer Druckänderung beschrieben. Dokumente US 4 887 457 und EP 0 473 173 beschrieben Verfahren zur Dichtigkeitsprüfung von Elementen, wobei mehrere Messungen der Dickenänderung des Elemente gemessen werden.

Der Erfindung liegt die Aufgabe zugrunde, auf einfache und schnelle Weise eine Dichtigkeitsprüfung galvanischer Elemente durchzuführen, die ein aus einer Metallfolie oder Metall/Kunststoff-Verbundfolie bestehendes dünnes flexibles Gehäuse besitzen, wobei auf Undichtigkeit, auf ungenügende Entgasung und nachträgliche Gasung geprüft wird. Das Verfahren soll, ohne dass zusätzliche aufwendige Arbeitsschritte notwendig werden, in den Produktionsprozess der Zelle integriert werden.

Diese Aufgabe wird erfindungsgemäß bei einem Verfahren der eingangs genannten Gattung durch die Merkmale der Ansprüche 1 und 2 gelöst. In den Unteransprüchen sind vorteilhafte Ausgestaltungen des Verfahrens angegeben.

Erfindungsgemäß werden in einem Behälter, welcher vakuum- und wahlweise auch überdruckstabil ist, eine oder mehrere Zellen im Softpack beispielsweise in ein Tray eingelegt. Im Behälter ist ein Meßsystem zur Bestimmung der Zellhöhe vorgesehen. Zur Messung der Zellhöhe werden beispielsweise Lichtschranken, Laserreflektion, Druckschalter und induktive oder kapazitive Höhenmesstaster verwendet.

Die Zellen werden nach der Vakuumsiegelung des Softpacks wahlweise direkt nach der Aktivierung mit Elektrolyt und vor der Formation oder nach der Formation in diesem Behälter vermessen. Dabei sind zwei Vorgehensweisen denkbar, die im folgenden anhand einer fertig formierten und anschließend entgasten Zelle erläutert werden.

In einer ersten Ausführungsform erfolgt die Prüfung der Zelle direkt nach Formation, Entgasung und Vakuumsiegelung. Dabei wird die Zelle im Softpack in dem Behälter über einen kurzen Zeitraum einem Überdruck im Bereich von 1 - 10 bar (absolut) ausgesetzt. Während dieser Zeit wird Luft durch evtl. vorhandene Löcher in den Softpack gepresst. Anschließend wird sofort ein definierter Unterdruck (Vakuum bis 500 mbar absolut) angelegt. Während des gesamten Zeitraumes wird die Zellhöhe gemessen, beispielsweise mit einem der oben genannten Verfahren, und Änderungen werden registriert. Insbesondere erfolgt die Höhenmessung dabei mit einem berührungslosen Messverfahren.

In einer weiteren Ausgestaltung erfolgt die Prüfung der Zelle nach Formation, Vakuumsiegelung und einer längeren Lagerzeit. Die Messung erfolgt dabei wie bei der ersten Ausführungsform, wobei allerdings der Schritt, dass die Zelle einem Überdruck ausgesetzt wird, entfallen kann, da durch die längere Lagerung bereits Luft durch ein etwaiges Loch im Zellengehäuse in die Zelle eindiffundieren konnte.

Bläht sich die Zelle im angelegten Vakuum nicht auf (Innendruck < Außendruck), wird kein Höhenunterschied gemessen, d. h. die Zelle ist ordnungsgemäß verschlossen und enthält nach wie vor den bei der Vakuumsiegelung erzeugten Unterdruck.

Wenn die Zelle sich im angelegten Vakuum aufbläht (Innendruck > Außendruck), zeigt die Höhenmessung eine Änderung, nämlich eine Erhöhung der Zellendicke. Die Ursache dafür kann darin liegen, dass die Zelle beim Vakuumsiegeln ungenügend entgast wurde, so dass von Anfang an kein optimales Vakuum in der Zelle vorhanden war, oder die Zelle hat nach der Vakuumsiegelung gasförmige Zersetzungsprodukte gebildet, z. B. durch einen Feinschluss oder durch eine elektrochemische Zersetzung, so dass das Vakuum in der Zelle zumindest teilweise aufgehoben wurde. Eine andere Möglichkeit liegt darin, dass die Verbundfolie, die als Verpackungsmaterial der Zellenbestandteile eingesetzt wird, durch Löcher oder schlechte Verarbeitung undicht wird, wodurch sich nach und nach das Vakuum durch einströmende Luft vermindert oder aufhebt. Eine weitere Möglichkeit liegt darin, dass das Siegelmaterial fehlerhaft oder die Siegelung fehlerhaft ausgeführt wurde, so dass sich nach und nach das Vakuum durch einströmende Luft vermindert oder aufhebt.

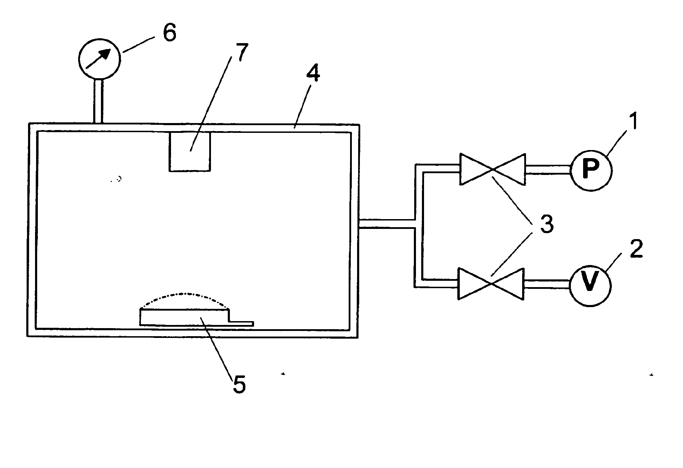

In der Figur ist schematisch eine Vorrichtung zur Durchführung des erfindungsgemäßen Verfahrens dargestellt. Die Zelle im Softpack 5 ist im Druckbehälter 4 angeordnet. Der Druckbehälter ist einerseits mit einem Druckluftanschluss 1, einem Vakuumanschluss 2 und entsprechenden Ventilen 3 versehen. Darüber hinaus besitzt der Behälter 4 eine Druckanzeige 6 (Manometer) und ein System 7 zur Messung der Zellhöhe.

## Patentansprüche

1. Verfahren zur Dichtigkeitsprüfung galvanischer Elemente, die ein aus einer Metallfolie oder Metall/Kunststoffverbundfolie bestehendes dünnes flexibles Gehäuse besitzen, **dadurch gekennzeichnet, dass** das galvanische Element nach Zusammenbau, Vakuumversiegelung und gegebenenfalls Formation in einem geschlossenen Behälter einem Überdruck und anschließend einem Unterdruck ausgesetzt und eine auftretende Dickenänderung gemessen wird, wobei die Messung der Dickenänderung mittels eines berührungslosen Messverfahrens erfolgt.

2. Verfahren zur Dichtigkeitsprüfung galvanischer Elemente, die ein aus einer Metallfolie oder Metall/Kunststoffverbundfolie bestehendes dünnes flexibles Gehäuse besitzen, **dadurch gekennzeichnet, dass** das galvanische Element nach Zusammenbau, Vakuumversiegelung, Formation und Lagerung in einem geschlossenen Behälter einem Unterdruck ausgesetzt und eine auftretende Dickenänderung gemessen wird, wobei die Messung der Dickenänderung mittels eines berührungslosen Messverfahrens erfolgt.

3. Verfahren nach Anspruch 1, **dadurch gekennzeichnet, dass** der Überdruck zwischen 1 und 10 bar (absolut), vorzugsweise zwischen 4 und 8 bar (absolut) liegt.

4. Verfahren nach einem der Ansprüche 1 bis 3, **dadurch gekennzeichnet, dass** der Unterdruck zwischen 0 und 500 mbar (absolut) liegt.

## Claims

1. Method for leak testing of electrochemical elements which have a thin flexible housing that is composed of a metal sheet or a metal/plastic composite sheet, **characterized in that**, after assembly, vacuum sealing and if necessary after formation in a closed container, the electrochemical element is subjected to an increased pressure and then to a reduced pressure, and any change in thickness that occurs is measured, the change in thickness being measured by means of a non-contacting measurement method.

2. Method for leak testing of electrochemical elements which have a thin flexible housing that comprises a metal sheet or a metal/plastic composite sheet, **characterized in that,** after assembly, vacuum sealing, formation and storage in a closed container, the electrochemical element is subjected to a reduced pressure, and any change in thickness that occurs is measured, the change in thickness being measured by means of a non-contacting measurement method.

3. Method according to Claim 1, **characterized in that** the increased pressure is between 1 and 10 bar (absolute), preferably between 4 and 8 bar (absolute).

4. Method according to one of Claims 1 to 3, **characterized in that** the reduced pressure is between 0 and 500 mbar (absolute).

## Revendications

1. Procédé pour tester l'étanchéité d'éléments galvaniques qui possèdent un boîtier flexible mince constitué d'une feuille métallique ou d'une feuille en composite métal/plastique, **caractérisé en ce que** l'élément galvanique après l'assemblage, le scellage sous vide, et éventuellement la formation dans un récipient fermé est soumis à une surpression et ensuite à une dépression puis une variation d'épaisseur produite est mesurée, la mesure de la variation d'épaisseur s'effectuant au moyen d'un procédé de mesure sans contact.

2. Procédé pour tester l'étanchéité d'éléments galvaniques qui possèdent un boîtier flexible mince constitué d'une feuille métallique ou d'une feuille en composite métal/plastique, **caractérisé en ce que** l'élément galvanique après l'assemblage, le scellage sous vide, la formation et le stockage dans un récipient fermé est soumis à une dépression et une variation d'épaisseur produite est mesurée, la mesure de la variation d'épaisseur s'effectuant au moyen d'un procédé de mesure sans contact.

3. Procédé selon la revendication 1, **caractérisé en ce que** la surpression est comprise entre 1 et 10 bars (absolus), de préférence entre 4 et 8 bars (absolus).

4. Procédé selon l'une quelconque des revendications 1 à 3, **caractérisé en ce que** la dépression est comprise entre 0 et 500 mbars (absolus).
